# NEUE EUROPÄISCHE PATENTSCHRIFT

(11) **EP 1 335 008 B2**
(45) Veröffentlichungstag und Bekanntmachung des Hinweises auf die Entscheidung über den Einspruch: **03.05.2017**
(45) Hinweis auf die Patenterteilung: 25.04.2007
(21) Anmeldenummer: 03002826.0
(22) Anmeldetag: 07.02.2003
(51) Int. Cl.: C09D 167/08

(54) **Lufttrocknender Beschichtungsstoff**
Air-drying coating composition
Composition de revêtement séchant à l'air

(30) Priorität: 07.02.2002 DE 10205128
(43) Veröffentlichungstag der Anmeldung: 13.08.2003
(73) Patentinhaber: DAW SE, 64372 Ober-Ramstadt (DE)
(72) Erfinder: Brockhaus, Claus, 64750 Lützel-Wiebelsbach (DE)
(74) Vertreter: Metten, Karl-Heinz

(56) Entgegenhaltungen:
- EP-A- 0 191 629
- WO-A1-00/29495
- DE-A- 19 647 416
- FR-A- 1 253 443
- US-A- 4 387 190
- NeocrylV-731-50 / Polyvinyl Chemie Brochure
- NeoCryl V-732-50 / Polyvinyl Chemie Brochure
- DSM NeoResins Website page
- R. LAMBOURNE ET AL.: 'Paint and surface coatings', Bd. 2, 1999, WOODHEAD PUBLISHING LIMITED Seite 190

## Beschreibung

Die Erfindung betrifft einen lufttrocknenden Beschichtungsstoff basierend auf einem Alkydharz, einem Acrylharz sowie weiteren Zusatzstoffen. Anwendungen finden derartige Beschichtungsstoffe als Lackierung jeglicher Art, jedoch insbesondere als Innenlackierungen.

Für lufttrocknende Lacke eignen sich als Bindemittel bevorzugt Langöl- und Mittelölalkydharze. Diese werden vorwiegend als Bautenlacke, Malerlacke, Schiffsfarben, Maschinenlacke und lufttrocknende Industrielacke verwendet. Die Filmbildung der lufttrocknenden Alkydharze basiert zum einen auf einer oxidativen sowie zum andern auf einer physikalischen Trocknung.

Die oxidative Trocknung wird beschleunigt durch Zusatz von Sikkativen. Die Menge der zugesetzten Sikkative sollte möglichst niedrig sein und sorgfältig ausgewählt werden, um eine allzu rasche Trocknung zu vermeiden, die häufig Oberflächenstörungen, Verfärbungen oder raschen Filmabbau zur Folge hat. So sind aus der EP 0 549 865 A1 als Sikkative Metallseifen, wie z.B. Bleiverbindungen, Kobaltoctoat, Mangan- oder Zirkonverbindungen bekannt. Zur Verhinderung der Hautbildung bei der Lagerung in Folge von Oxidation an der Oberfläche werden den Lacken häufig Oxime, z.B. Butanonoxim, als Hautverhinderungsmittel zugegeben.

Nach dem Verdunsten des Lösemittels - der physikalischen Trocknung - bildet sich in vielen Fällen ein noch nicht klebfreier Film, der in Folge der Reaktion mit Luftsauerstoff schnell in einen unlöslichen, vernetzten Zustand übergeht. Die oxidative Trocknung führt somit zu guten mechanischen Eigenschaften wie Härte, Elastizität, Kratzfestigkeit, chemische Beständigkeit sowie Wasserfestigkeit.

Bei ofentrocknenden oder forciert trocknenden Lacksystemen, wofür sich vor allem kurzölige, aber auch mittelölige Alkydharze als Bindemittel eignen, beschleunigt die erhöhte Verarbeitungstemperatur die physikalische aber auch die oxidative Trocknung. Aufgrund der Temperatur werden Härtungsvorgänge im Harz fortgeführt, wodurch eine weitere Verfestigung des Films mit daraus resultierender höherer Oberflächenhärte sowie verbesserter Elastizität resultieren.

Als weitere Alternativen für die Härtung und die Trocknung der Lacke ist die Vernetzung der Alkydharze mit Polyisocyanaten aus dem Stand der Technik bekannt. Bei rein ofentrocknenden Alkydharzlacken ist die Kombination von kurzöligen Alkyden mit Aminoharzen bekannt. In diesen Fällen erfolgt bei der Trocknung neben der physikalischen Verdunstung des Lösemittels überwiegend eine chemische Härtung mit den reaktiven Kombinationsharzen.

Die Verträglichkeit der Alkydharze mit anderen Lackbindemitteln ist meist sehr gut. Alkydharze können mit Cellulosenitrat, Chlorkautschuk, Vinylchloridcopolymerisaten, Aminoharzen, Ketonharzen, Phenol- und Maleinatharzen kombiniert werden, um spezielle Eigenschaften zu erzielen. Diese Bindemittelkombinationen sind entweder nicht in aliphatischen Kohlenwasserstoffen löslich oder benötigen gemäß des Standes der Technik zwingend Primärtrockner auf der Basis von Kobalt, Mangan oder ähnlichem.

Aus der US 4,387,190 ist eine Lackzusamensetzung bekannt, die neben Alkydharz reaktive Acrylverbindung enthält.

Nachteil dieser aus dem Stand der Technik bekannten Lacksysteme ist, daß Kobalt-Primärtrockner sensibilisierend wirken und Kobalt in Form von einatmenbarer Stäube im Verdacht stehen, krebserregende Wirkung aufzuweisen, was die Anwendung solcher Lacke im Spritzverfahren und beim Schleifen eingrenzen kann. In gleicher Weise werden die Hautverhütungsmittel, wie z.B. Butanonoxim in Frage gestellt, da auch bei diesen eine krebserregende Wirkung diskutiert wird.

Ausgehend hiervon war es Aufgabe der vorliegenden Erfindung, einen lufttrocknenden Beschichtungsstoff bereitzustellen, der auf Primärtrockner und Hautverhütungsmittel verzichtet und somit die erwähnten gesundheitlichen Nachteile ausschließt.

Diese Aufgabe wird durch den lufttrocknenden Beschichtungsstoff mit den Merkmalen des Anspruchs 1 gelöst. In den abhängigen Ansprüchen werden vorteilhafte Weiterbildungen des Beschichtungsstoffes aufgeführt. In den Ansprüchen 14 bis 16 wird die Verwendung des erfindungsgemäßen Gegenstandes beschrieben.

Erfindungsgemäß wird ein lufttrocknender Beschichtungsstoff mit folgender Zusammensetzung gelehrt:
a) 5 bis 40 Gew.-% mindestens eines mittel- bis langöligen Alkydharzes mit einem Ölgehalt von 40 oder mehr Gew.-%,
b) 5 bis 40 Gew.-% mindestens eines aliphatenlöslichen Acrylharzes und/oder eines Acrylcopolymerisatharzes,
c) 5 bis 50 Gew.-% eines Füllstoffs und/oder Pigments,
d) 0,05 bis 1 Gew.-% eines ausgewählten Sekundärtrockners, bezogen auf das Metall,
e) 10 bis 45 Gew.-% eines Lösungsmittels und
f) bis zu 5 Gew.-% eines Verdickungsmittels, eines viskositätssenkenden Harzes, eines Mattierungsmittels, eines Silikonöls und/oder weiteren Zusatzstoffen, jedoch keine Primärtrockner

Die Anteile der Komponenten a) bis f) ergeben dabei in Summe 100 Gew.-%.

Vorzugsweise sind die Alkydharze in einer Konzentration zwischen 10 und 25 Gew.-% im Beschichtungsstoff enthalten. Bei der Erfindung werden werden bevorzugt mittelölige Alkydharze eingesetzt, d.h. Harze mit einem Ölgehalt zwischen 40 und 60 %.

Hinsichtlich des Acrylharzes enthält der Beschichtungsstoff bevorzugt zwischen 5 und 15 Gew.-% des aliphatenlöslichen Acrylharzes. In gleicher Weise kann auch ein Acrylcopolymerisatharz, in Kombination oder alleinig, verwendet werden.

Die Füllstoffe und/oder Pigmente sind bevorzugt in einer Konzentration zwischen 25 und 35 Gew.-% in bezug auf die Masse des Beschichtungsstoffes enthalten. Hierbei wird besonders bevorzugt Titandioxid als Pigment eingesetzt.

Besonderes Kennzeichen des vorliegenden Beschichtungsstoffes ist es, daß keinerlei Primärtrockner darin enthalten ist. Primärtrockner bauen auf Metallen aus Nebengruppen des Periodensystems der chemischen Elemente auf, bei denen ein Wechsel der Oxidationsstufe stattfindet und wirken für sich bereits katalytisch bei der unter Einwirkung von Luftsauerstoff einsetzenden radikalischen Polymerisation, auf der die Vernetzung oxidativ trocknenden Alkydharze beruhen.

Dahingegen basieren Sekundärtrockner auf Metallen aus Hauptgruppen des Periodensystems, bei denen kein Wechsel der Oxidationsstufe erfolgt und besitzen eine eher geringe katalytische Aktivität. Überraschenderweise konnte gezeigt werden, daß bei der erfindungsgemäßen Zusammensetzung auch alleine mittels eines Sekundärtrockners eine ausreichende Trocknung ermöglichen. Als Sekundärtrockner werden im vorliegenden Beschichtungsstoff erfindungsgemäß Octoate des Calciums verwendet. Diese Verbindungen sind gesundheitlich unbedenklich.

Bevorzugt enthält der Beschichtungsstoff zwischen 20 und 40 Gew.-% eines das Alkydharz und das Acrylharz lösenden Lösungsmittels. Als Lösungsmittel sind dabei bevorzugt aliphatische Kohlenwasserstoffe enthalten. Hierzu zählen insbesondere N-Paraffine, Isoparaffine und/oder Cycloparaffine.

Alternativ ist es auch möglich, daß als Lösungsmittel ein entaromatisiertes Testbenzin eingesetzt wird.

Neben der bisher beschriebenen Zusammensetzung ist es in einer weiteren Variante möglich, den Beschichtungsstoff mit weiteren aliphatenlöslichen und physikalisch trocknenden Harzen zu vermischen. Hierzu zählen beispielsweise Kohlenwasserstoffharze.

Da es sich bei dem vorliegenden Beschichtungsstoff um einen lufttrocknenden handelt, erfolgt das Aushärten zu einem Beschichtungsfilm bevorzugt in Gegenwart von Sauerstoff bei Raumtemperatur.

Verwendung finden die erfindungsgemäßen Beschichtungsstoffe vor allem als Maler-, Bauten-, Konsum-, Industrie-, Maschinen- und/oder Fahrzeuglacke.

Da die erfindungsgemäßen Beschichtungsstoffe eine sehr geringe Vergilbungsneigung aufweisen und insbesondere auch die Geruchsbeeinträchtigung durch den Beschichtungsstoff sehr gering ist, eignen sich die Beschichtungsstoffe hervorragend für Innenlackierungen. Der geringe Geruch des Beschichtungsstoffes ist darauf zurückzuführen, daß die Bildung von Abbauprodukten aufgrund der erfindungsgemäßen Zusammensetzung des Beschichtungsstoffes stark unterdrückt werden kann. Zu diesen Abbauprodukten zählen beispielsweise aliphatische Aldehyde und Carbonsäuren, die zu einem unangenehmen Geruchsempfinden führen und Reizerscheinungen der Atmungsorgane und der Augen hervorrufen können.

Verwendung finden die Beschichtungsstoffe ebenso als Matt-, Struktur-, Effekt-, Überwasser-, Fußboden- und/oder Reparaturlacke. Somit können diese Beschichtungsstoffe zur Lackierung von beispielsweise Heizkörpern, Fenstern, Türen und Holzwerkstoffen, z.B. Möbeln, verwendet werden.

## Patentansprüche

1. Lufttrocknender Beschichtungsstoffmit folgender Zusammensetzung:
a) 5 bis 40 Gew.-% mindestens eines mittel- bis langöligen Alkydharzes mit einem Ölgehalt von 40 oder mehr Gew.-%,
b) 5 bis 40 Gew.-% mindestens eines aliphatenlöslichen Acrylharzes und/oder eines Acrylcopolymerisatharzes,
c) 5 bis 50 Gew.-% eines Füllstoffs und/oder Pigments,
d) 0,05 bis 1 Gew.-% eines Sekundärtrockners, bezogen auf das Metall, wobei der Sekundärtrockner Calciumoctoat ist,
e) 10 bis 45 Gew.-% eines Lösungsmittels und
f) bis zu 5 Gew.-% eines Verdickungsmittels, eines Mattierungsmittels, eines Silikonöls und/oder weiteren Zusatzstoffen,
jedoch keine Primärtröckner,
wobei die Anteile von a) bis f) in der Summe 100 Gew.-% ergeben.

2. Beschichtungsstoff nach Anspruch 1, **dadurch gekennzeichnet, dass** zwischen 10 und 25 Gew.-% des Alkydharzes enthalten ist.

3. Beschichtungsstoffnach mindestens einem der vorhergehenden Ansprüche, **dadurch gekennzeichnet, dass**
ein mittelöliges Alkydharz enthalten ist.

4. Beschichtungsstoff nach mindestens einem der vorhergehenden Ansprüche, **dadurch gekennzeichnet, dass**
zwischen 5 und 15 Gew.-% des aliphätenlöslidhen Acrylharzes und/oder Acrylcopolymerisatharzes enthalten sind.

5. Beschichtungsstoff nach mindestens einem der vorhergehenden Ansprüche, **dadurch gekennzeichnet, dass**
zwischen 25 und 35 Gew.-% des Füllstoffs und/oder Pigments enthalten sind.

6. Beschichtungsstoff nach mindestens einem der vorhergehenden Ansprüche, **dadurch gekennzeichnet, dass**
als Pigmente Titandioxid und/oder anorganische/organische Buntpigmente enthalten sind.

7. Beschichtungsstoff nach mindestens einem der vorhergehenden Ansprüche, **dadurch gekennzeichnet, dass**
kein Hautverhütungsmittel enthalten ist.

8. Beschichtungsstoff nach mindestens einem der vorhergehenden Ansprüche, **dadurch gekennzeichnet, dass**
zwischen 20 und 40 Gew.-% des Lösungsmittels enthalten sind.

9. Beschichtungsstoff nach mindestens einem der vorhergehenden Ansprüche, **dadurch gekennzeichnet, dass**
als Lösungsmittel aliphatische Kohlenwasserstoffe enthalten sind.

10. Beschichtungsstoff nach mindestens einem der vorhergehenden Anspruche, **dadurch gekennzeichnet, dass**
als Lösungsmittel n-Paraffine, Isoparaffine und/oder Cycloparaffine enthalten sind.

11. Beschichtungsstoff nach mindestens einem der vorhergehenden Anspruche, **dadurch gekennzeichnet, dass**
der Beschichtungsstoff mit weiteren aliphatenlöslichen, physikalisch trocknenden Harzen, z. B. Kohlenwasserstoffharzen vermischt ist.

12. Beschichtungsstoff nach mindestens einem der vorhergehenden Ansprüche, **dadurch gekennzeichnet, dass**
der Beschichtungsstoff in Gegenwart von Sauerstoff mindestens bei Raumtemperatur zu einem Beschichtungsfilm aushärtet.

13. Verwendung des Beschichtungsstoffes nach mindestens einem der Anspruche 1 bis 13 als Maler-, Bauten-, Konsum-, Industrie-, Maschinen- und/oder Fahrzeuglacke, insbesondere für Innenlackierungen.

14. Verwendung des Beschichtungsstoffes nach mindestens einein der Ansprüche 1 bis 13 als Matt-, Struktur-, Effekt-, Überwasser-, Fußboden- und/oder Reparaturlacke.

15. Verwendung des Beschichtungsstoffes nach Anspruch 14 als Lack für Heizkörper, Fenster, Türen und Holzwerkstoffe, z. B. Möbel.

## Claims

1. Air-drying coating composition with the hollowing components:
a) 5 to 40 wt. % of at least one medium to long oily alkyd resin with an oil content of 40 or more wt. %;
b) 5 to 40 wt. % of at least one aliphate soluble acrylic resin and/or an acrylic copolymerisation resin;
c) 5 to 50 wt. % of a filling agent and/or pigment;
d) 0.05 to 1 wt. % of a secondary drying agent in relation to the metal, whereby the secondary drying agent is calcium octoate,
e) 10 to 45 wt. % of a solvent; and
f) up to 5 wt. % of a thickening agent, a matting agent, a silicone oil and/or further additives, but no primary drying agent,
whereby the quantities of a) to f) result in 100 wt. %.

2. Coating composition according to Claim 1, **characterised in that** between 10 and 25 wt. % of the alkyd resin are present.

3. Coating composition according to at least one of the preceding Claims, **characterised in that** a medium oily alkyd resin is present.

4. Coating composition according to at least one of the preceding Claims, **characterised in that** between 5 and 15 wt. % of the aliphate soluble acrylic resin and/or the acrylic copolymerisation resin are present.

5. Coating composition according to at least one of the preceding Claims, **characterised in that** between 25 and 35 wt. % of the filling agent and/or pigments are present.

6. Coating composition according to at least one of the preceding Claims, **characterised in that** titanium oxide and/or anorganic/organic colour pigments are present as the pigment.

7. Coating composition according to at least one of the preceding Claims, **characterised in that** no skin presenting agent is present.

8. Coating composition according to at least one of the preceding Claims, **characterised in that** between 20 and 40 wt. % of the solvent is present.

9. Coating composition according to at least one of the preceding Claims, **characterised in that** aliphatic hydrocarbons are present as the solvent.

10. Coating composition according to at least one of the preceding Claims, **characterised in that** n-paraffin, isoparaffin and/or cycloparaffin are present as the solvent.

11. Coating composition according to at least one of the preceding Claims, **characterised in that** the coating composition is mixed with additional aliphate soluble physically drying resins, for example hydrocarbon resins.

12. Coating composition according to at least one of the preceding Claims, **characterised in that** the coating composition cures into a coating film in the presence of oxygen at least at room temperature.

13. Use of the coating composition according to at least one of the Claims 1 to 12 as a painters, construction, consumer, industrial, machine and/or vehicle lacquer, in particular for interior applications.

14. Use of the coating composition according to at least one of the Claims 1 to 12 as a matt, structured, special effect, above water, floor and/or repair lacquer.

15. Use of the coating composition according to Claim 14 as a lacquer for radiators, windows, doors and wooden materials, for example furniture.

## Revendications

1. Composition de revêtement séchant à l'air de la composition suivante :
a) 5 à 40 % en poids d'au moins une résine alkyde à huiles moyennes à longues avec une teneur en huile de 40 % en poids ou plus,
b) 5 à 40 % en poids d'au moins une résine acrylique soluble dans des hydrocarbures aliphatiques et/ou d'une résine de copolymère acrylique,
c) 5 à 50 % en poids d'une charge et/ou d'un pigment,
d) 0,05 à 1 % en poids, rapporté au métal, d'un siccatif secondaire, le siccatif secondaire étant l'octoate de calcium,
e) 10 à 45 % en poids d'un solvant et
f) jusqu'à 5 % en poids d'un agent épaississant, d'un agent de matité, d'une huile de silicone et/ou d'autres adjuvants, toutefois pas de siccatifs primaires,
dans laquelle les proportions de a) à f) totalisent 100 % en poids.

2. Composition de revêtement selon la revendication 1, **caractérisée en ce qu'**entre 10 et 25 % en poids de la résine alkyde sont contenus.

3. Composition de revêtement selon l'une au moins des revendications précédentes, **caractérisée en ce qu'**une résine alkyde à huiles moyennes est contenue.

4. Composition de revêtement selon l'une au moins des revendications précédentes, **caractérisée en ce qu'**entre 5 et 15 % en poids de la résine acrylique et/ou de la résine de copolymère acrylique soluble dans des hydrocarbures aliphatiques sont contenus.

5. Composition de revêtement selon l'une au moins des revendications précédentes, **caractérisée en ce qu'**entre 25 et 35 % en poids de la charge et/ou du pigment sont contenus.

6. Composition de revêtement selon l'une au moins des revendications précédentes, **caractérisée en ce que** de l'oxyde de titane et/ou des pigments inorganiques/organiques colorés sont contenus comme pigments.

7. Composition de revêtement selon l'une au moins des revendications précédentes, **caractérisée en ce qu'**aucun inhibiteur de peau n'est contenu.

8. Composition de revêtement selon l'une au moins des revendications précédentes, **caractérisée en ce qu'**entre 20 et 40 % en poids du solvant sont contenus.

9. Composition de revêtement selon l'une au moins des revendications précédentes, **caractérisée en ce que** des hydrocarbures aliphatiques sont contenus comme solvants.

10. Composition de revêtement selon l'une au moins des revendications précédentes, **caractérisée en ce que** des n-paraffines, des isoparaffines et/ou des cycloparaffines sont contenues comme solvants.

11. Composition de revêtement selon l'une au moins des revendications précédentes, **caractérisée en ce que** la composition de revêtement est mélangée à d'autres résines solubles dans les hydrocarbures aliphatiques, à séchage physique, par exemple à des résines d'hydrocarbure.

12. Composition de revêtement selon l'une au moins des revendications précédentes, **caractérisée en ce que** la composition de revêtement durcit en présence d'oxygène en un film de revêtement au moins à la température ambiante.

13. Utilisation de la composition de revêtement selon l'une au moins des revendications 1 à 12 comme laque de peintre, de bâtiment, de consommation, industrielle, de machine et/ou de véhicules, en particulier pour des peintures intérieures.

14. Utilisation de la composition de revêtement selon l'une au moins des revendications 1 à 12 comme laque mate, structurée, à effet, de pièces émergées, de sol et/ou de réparation.

15. Utilisation de la composition de revêtement selon la revendication 14 comme laque pour radiateurs de chauffage central, pour fenêtres, pour portes et pour matériaux à base de bois, par exemple pour des meubles.
